(19) Europäisches Patentamt
European Patent Office
Office européen des brevets

(11) EP 4 198 071 A1

(12) **EUROPEAN PATENT APPLICATION**
published in accordance with Art. 153(4) EPC

(43) Date of publication:
**21.06.2023 Bulletin 2023/25**

(21) Application number: **21856267.6**

(22) Date of filing: **12.08.2021**

(51) International Patent Classification (IPC):
***C08G 61/02** (2006.01)* ***C07F 15/04** (2006.01)*

(52) Cooperative Patent Classification (CPC):
**C07F 15/04; C08G 61/02**

(86) International application number:
**PCT/KR2021/010748**

(87) International publication number:
**WO 2022/035261 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.08.2020 KR 20200101053**
**12.08.2020 KR 20200101128**

(71) Applicant: **Lg Chem, Ltd.**
**Seoul 07336 (KR)**

(72) Inventors:
- **LEE, Jungyong**
**Daejeon 34122 (KR)**
- **KIM, Hyeon Hui**
**Daejeon 34122 (KR)**
- **CHOI, Jong Young**
**Daejeon 34122 (KR)**
- **CHOE, Dongcheol**
**Daejeon 34122 (KR)**
- **KIM, Hyunju**
**Daejeon 34122 (KR)**
- **JEE, Soyeon**
**Daejeon 34122 (KR)**
- **CHOE, Jae Hoon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PRODUCING ZERO-VALENT NICKEL COMPOUND AND METHOD FOR PRODUCING POLYMER**

(57) The present disclosure relates to a method for manufacturing a zero-valent nickel compound, and a method for manufacturing a polymer.

【FIG. 1】

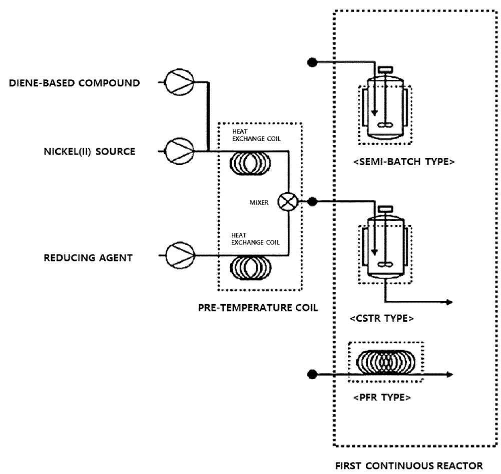


EP 4 198 071 A1

## Description

[Technical Field]

This application claims priority to and the benefits of Korean Patent Application No. 10-2020-0101053 and No. 10-2020-0101128, each filed with the Korean Intellectual Property Office on August 12, 2020, the entire contents of which are incorporated herein by reference.

The present disclosure relates to a method for manufacturing a zero-valent nickel compound, and a method for manufacturing a polymer.

[Background Art]

A nickel complex is manufactured by reacting a zero-valent nickel compound and a ligand, and the method has disadvantages in that the zero-valent nickel compound is difficult to handle due to its sensitivity to oxygen and moisture, and manufacturing costs are high. In addition, a reducing agent such as DIBAL used in the manufacturing process is highly inflammable, and has a high risk of accidents.

In addition, a batch method generates many by-products during mass production causing problems of reducing purity and yield, and is difficult to use in commercial production since product yield and properties vary by the batch and performance of a final product is not constant.

A general batch reactor is difficult to operate in commercial scale production, and has a problem of increasing investment costs and operating costs. In addition, operation using a batch reactor usually requires repetition of a series of operations such as temperature raising, reactant injection, reaction, cooling and product release. Accordingly, productivity per batch operation is low, which causes a problem of increasing a reactor volume or the number of reactors for mass production.

In addition, regarding a method for manufacturing a polymer using the nickel complex, many known methods manufacturing a polymer are present in the art, and examples thereof may include Suzuki polymerization described in, for example, the international patent application laid-open publication No. WO 00/53656 and Yamamoto reaction described in, for example, the literature [T. Yamamoto, "Electrically Conducting And Thermally Stable n-Conjugated Poly(arylene)s Prepared by Organometallic Processes", Progress in Polymer Science 1993, 17, 1153-1205]. Both of these polymerization methods operate through a "metal insertion" in which a metal atom of a metal complex catalyst is inserted between a leaving group and an aryl group of a monomer. A nickel complex catalyst is used in the polymerization using Yamamoto reaction, and a palladium complex catalyst is used in the polymerization using Suzuki reaction.

Characteristics of a polymer are determined by characteristics, properties and composition of monomers used for manufacturing the polymer. In addition thereto, a polymer also requires process characteristics such as reproducibility capable of producing a constant product regardless of the number of reactions or the reaction scale. However, such reproducibility is practically difficult to obtain in an existing batch reaction-type manufacturing process.

This is due to the fact that characteristics of a polymer are affected by various reaction conditions such as a reactor shape, a monomer input rate and a reaction temperature, and it is difficult to uniformly control these reaction conditions for each number of reactions.

<u>Prior Art Documents</u>

<u>Non-Patent Documents</u>

J. Org. Chem. (1990), 4229-4230

[Disclosure]

[Technical Problem]

The present disclosure is directed to providing a method for manufacturing a zero-valent nickel compound.

The present disclosure is directed to providing a method for manufacturing a polymer using a nickel complex.

[Technical Solution]

One embodiment of the present disclosure provides a method for manufacturing a zero-valent nickel compound, the method comprising supplying a nickel(II) source to a first continuous reactor; supplying a diene-based compound to the first continuous reactor; supplying a reducing agent to the first continuous reactor; and reacting the nickel(II) source,

the diene-based compound and the reducing agent in the first continuous reactor, wherein supply rates of the nickel(II) source, the diene-based compound and the reducing agent are the same as or different from each other, and are each from 0.5 g/min to 500 g/min.

One embodiment of the present disclosure provides a method for manufacturing a polymer, the method comprising continuously supplying a zero-valent nickel compound to a second continuous reactor; supplying a ligand to the second continuous reactor; preparing a nickel complex by reacting the zero-valent nickel compound and the ligand; continuously supplying the nickel complex to a third continuous reactor; continuously supplying a monomer to the third continuous reactor; and conducting a polymerization reaction, wherein a supply rate of the nickel complex; and a supply rate of the monomer are the same as or different from each other, and are each from 0.5 g/min to 500 g/min.

[Advantageous Effects]

By using a continuous reaction process instead of an existing batch method, a method for manufacturing a zero-valent nickel compound according to one embodiment of the present disclosure is capable of manufacturing a zero-valent nickel compound with constant quality, and, even when producing a large amount, a deviation in the produced zero-valent nickel compound may be adjusted to be small.

In addition, the method for manufacturing a zero-valent nickel compound according to one embodiment of the present disclosure has more enhanced stability by quickly control heat generation.

A method for manufacturing a polymer according to one embodiment of the present disclosure is capable of securing high yield and reproducibility by using a continuous reaction process instead of an existing batch method.

[Description of Drawings]

FIG. 1 is a process diagram illustrating a method for manufacturing a zero-valent nickel compound of the present disclosure.

FIG. 2 is a process diagram illustrating a method for manufacturing a polymer according to one embodiment of the present disclosure.

FIG. 3 is a process diagram schematically illustrating a process for manufacturing a polymer corresponding to an existing method.

[Mode for Disclosure]

Hereinafter, the present specification will be described in more detail.

As described above, an existing batch reactor has problems in that operating the reactor is difficult in commercial scale production, and investment costs and operating costs increase. In addition, there is a problem in that there is a deviation in quality by the batch.

In view of the above, one embodiment of the present disclosure provides a method for manufacturing a zero-valent nickel compound, the method comprising supplying a nickel(II) source to a first continuous reactor; supplying a diene-based compound to the first continuous reactor; supplying a reducing agent to the first continuous reactor; and reacting the nickel(II) source, the diene-based compound and the reducing agent in the first continuous reactor.

The method for manufacturing a zero-valent nickel compound has an advantage of being suitable for a large scale continuous process by minimizing a quality deviation for each process. Specifically, items for evaluating quality of the zero-valent nickel compound may be compared using methods generally used in the art. For example, when producing a polymer and the like using the manufactured zero-valent nickel compound, a method of calculating a conversion ratio and the like, and comparing for each process may be used.

In addition, an inert environment is difficult to create when using an existing batch reactor, which causes a problem of increasing a risk of accidents due to highly flammable reactants. However, by the method for manufacturing a zero-valent nickel compound according to one embodiment of the present disclosure using a continuous reactor, inside the reactor is readily under an inert atmosphere, which has an advantage of improving stability even when using highly flammable reactants.

In the present specification, a "zero-valent nickel compound" means a precursor material used for manufacturing a nickel complex, and may be in a complex form. Specifically, it means a nickel compound having the oxidation number of nickel adjusted to 0, and may specifically be bis(1,5-cyclooctadiene) nickel ($Ni(COD)_2$).

In the present specification, the "zero-valent nickel compound" may also be expressed as a "nickel complex precursor".

In the present specification, a "nickel complex" means a compound in which nickel and a ligand are complexed.

Specifically, it is represented by Ni(L)n, and n is an integer of 2 to 4 and L means a ligand. When n is 2 or greater, Ls in the parentheses may be the same as or different from each other.

L means a ligand, and may be a pyridine-based ligand, a phosphine-based ligand, a carboxylic acid-based ligand, a nitrile-based ligand or a halide-based ligand.

Specifically, the nickel complex may be t-BuNC [Ni(t-BuNC)$_2$], [Ni(nbd)$_2$], [Ni(cod)(bpy)], [Ni(AN)$_2$], [Ni(PPh$_3$)$_4$], [Ni(cod)(PPh$_3$)$_2$], [NiBr(C$_3$H$_5$)$_2$], [NiBr(C$_3$H$_5$)$_2$]or NiCl(C$_3$H$_5$)(PPh$_3$). Herein, nbd means bicyclo[2.2.1]hepta-2,5-dien, bpy means 2,2'-bipyridyl, and AN means acrylonitrile. In addition to the above-mentioned examples, various types of nickel complexes illustrated in existing articles [J. Org. Chem. (1990), 4229-4230, Tetrahedron letters 39, 3375 to 3378(1975), Organometallics 2017, 36, 3508-3519, Chem. Soc. Rev., 1985, 14, 93-120 and the like] may be included.

In the present specification, a "continuous reactor" is a reactor conducting a reaction while continuously introducing reactants used in the reaction, and supply of reactants and release of products may be conducted at the same time. Types of the reactor are not particularly limited, and examples thereof may comprise a semi-batch reactor, a plug flow reactor (hereinafter, PFR) and a continuous stirred tank reactor (hereinafter, CSTR).

In the present specification, unless otherwise specified, descriptions on the "continuous reactor" may be applied to all of the first continuous reactor, the second continuous reactor or the third continuous reactor.

In the present specification, a "first continuous reactor" means a reactor manufacturing a zero-valent nickel compound, and a "second continuous reactor" means a reactor preparing a nickel complex. Herein, the second continuous reactor and the first continuous reactor may be continuously connected to each other. The means of connection is not particularly limited, and a tube used in chemical processes may be used.

In the present specification, a "third continuous reactor" means a reactor manufacturing a polymer using a nickel complex. Herein, the third continuous reactor may be continuously connected to another continuous reactor. The means of connection is not particularly limited, and a tube used in chemical processes may be used.

FIG. 1 is a process diagram illustrating the method for manufacturing a zero-valent nickel compound of the present disclosure, and illustrates a process of supplying a nickel(II) source, a diene-based compound and a reducing agent to a first continuous reactor. As illustrated in FIG. 1, a semi-batch reactor type, a PFR type or a CSTR type may be selected as the first continuous reactor.

In one embodiment of the present disclosure, the first continuous reactor and the second continuous reactor may be continuously connected. This is advantageous for making inside the reactor to be under an inert environment, and has an advantage of producing a product in each reactor and supplying the product to another reactor at the same time. The means of connection is not particularly limited, and a tube used in chemical processes may be used.

The method for manufacturing a zero-valent nickel compound according to one embodiment of the present disclosure is conducted in the first continuous reactor. Herein, by continuously supplying the manufactured zero-valent nickel compound to continuously connected another second continuous reactor as the first continuous reactor, a problem of separately storing or treating the zero-valent nickel compound that is difficult to handle may be resolved. Since the zero-valent nickel compound is manufactured in the first continuous reactor and simultaneously supplied to the second continuous reactor, there is an advantage of saving costs and efforts required for stabilizing the zero-valent nickel compound.

In one embodiment of the present disclosure, the method for manufacturing a zero-valent nickel compound is conducted as a continuous process. A zero-valent nickel compound has been manufactured in a batch reactor in the art, and a dropwise addition of a reducing agent for a minimum of 30 minutes or longer and an additional time of 30 minutes or longer for aging has been required, however, an additional aging time is not required in the continuous process, and an equal level of yield may be secured compared to the above-mentioned batch process even with a short process time. In addition, in an existing batch reactor, the reaction needs to be conducted under an extremely low temperature environment of -78°C or lower, however, heat is readily controlled in the continuous process, and an equal level of yield is secured without a separate reaction heat control even under an environment higher than the extremely low temperature (ex. -20°C). Meanwhile, an existing batch reactor has a risk of accidents since moisture and oxygen are introduced during manufacturing, however, the continuous process of the present disclosure has an advantage of minimizing the risk of accidents since operation is conducted under an inert condition.

In one embodiment of the present disclosure, the nickel(II) source, the diene-based compound and the reducing agent are materials used as a raw material for manufacturing the zero-valent nickel compound, and the types and the characteristics are not particularly limited.

In one embodiment of the present disclosure, the nickel(II) source is a material for supplying a nickel atom, and materials generally used in the art may be used. However, from the viewpoint of stability and economic feasibility, comprising nickel acetylacetonate {Ni(acac)$_2$} is preferred.

In one embodiment of the present disclosure, the diene-based compound may be any one or more selected from the group consisting of 1,4-cyclohexadiene, bicyclo[2.2.2]hepta-2,5-diene, 5-ethylidene-2-norbonene, 5-methylene-2-norbonene, 5-vinyl-2-norbonene, bicyclo[2.2.2]octa-2,5-diene, 4-vinylcyclohex-1-ene, bicyclo[2.2.1]hepta-2,5-diene, bicyclopentadiene, methyltetrahydroindene, 5-allyl bicyclo[2.2.1]hept-2-ene and 1,5-cyclooctadiene, and is more preferably 1,4-cyclohexadiene.

In one embodiment of the present disclosure, the reducing agent may be an organic reducing agent or an inorganic reducing agent. Examples thereof may comprise DIBAL, $NaBH_4$ or $KBH_4$, Zn powder, magnesium or hydrogen, and DIBAL is preferred.

In one embodiment of the present disclosure, the method of supplying the nickel(II) source, the diene-based compound and the reducing agent to the first continuous reactor is not particularly limited, however, for example, the first continuous reactor comprises one or more continuous channels, and the nickel(II) source, the diene-based compound and the reducing agent may each be supplied to the continuous channels.

In one embodiment of the present disclosure, the continuous channel is a constitution for introducing the reaction material to the reactor. The continuous channel may mean an input unit (or injection unit) for adjusting an input amount of each raw material in the continuous reactor. Herein, the input amount of the raw material injected to each continuous channel may be adjusted, and by adjusting each input amount depending on the reaction environment, side reactions may be minimized.

In one embodiment of the present disclosure, the first continuous reactor may comprise one or more continuous channels, and specifically, may comprise 1 to N (N is a positive integer of 1 to 10) continuous channels.

In one embodiment of the present disclosure, the first continuous reactor comprises one or more continuous channels, and the nickel(II) source, the diene-based compound and the reducing agent may be supplied to the same continuous channel or different continuous channels.

In one embodiment of the present disclosure, the first continuous reactor comprises one or more continuous channels, and the nickel(II) source, the diene-based compound and the reducing agent may all be supplied to different continuous channels. For example, the first continuous reactor comprises first to third continuous channels, and the nickel(II) source may be supplied to the first continuous channel, the diene-based compound may be supplied to the second continuous channel, and the reducing agent may be supplied to the third continuous channel.

In one embodiment of the present disclosure, the first continuous reactor comprises one or more continuous channels, and two types of the nickel(II) source, the diene-based compound and the reducing agent may be supplied to the same continuous channel, and the other one may be supplied to another continuous channel. For example, the first continuous reactor comprises first and second continuous channels, and the nickel(II) source and the diene-based compound may be supplied to the first continuous channel and the reducing agent may be supplied to the second continuous channel.

In one embodiment of the present disclosure, the first continuous reactor comprises one or more continuous channels, and the nickel(II) source, the diene-based compound and the reducing agent may all be supplied to the same continuous channel.

In one embodiment of the present disclosure, the supplying of a nickel(II) source to a first continuous reactor; the supplying of a diene-based compound to the first continuous reactor; and the supplying of a reducing agent to the first continuous reactor may each be repeated two or more times, and herein, the continuous channels to which each of the materials is supplied may be the same as or different from each other. For example, the same diene-based compound may be supplied over two times, and different diene-based compounds may be consecutively supplied two or more times.

In one embodiment of the present disclosure, a step of mixing the nickel(II) source, the diene-based compound and the reducing agent may be further comprised. Through the step, generation of unreacted materials may be reduced by increasing a mixing ratio of each material, the temperature may be readily controlled, and as a result, the conversion ratio may be enhanced.

In one embodiment of the present disclosure, the mixing of the nickel(II) source, the diene-based compound and the reducing agent may be conducted using a mixer.

As illustrated in FIG. 1, the nickel(II) source, the diene-based compound and the reducing agent may be mixed using a mixer before supplying to the first continuous reactor.

In one embodiment of the present disclosure, the mixer may comprise any one or more of a static mixer, a T mixer and a microreactor. The static mixer may be a plate mixer, a kenics mixer or a Sulzer mixer, but is not limited thereto.

In one embodiment of the present disclosure, the microreactor may comprise a plurality of microchannels repeating branching and joining. Mixing efficiency of the reactants may further increase by comprising the microchannels.

In one embodiment of the present disclosure, the microchannel may have various hydrodynamic structures, and for example, may have a structure in which one flow path forms a deep wave shape, or a structure in which two or more flow paths are connected by forming a plurality of branch points while repeating branching and joining.

In one embodiment of the present disclosure, the microchannel has a size of 1 $\mu$m to 10 mm.

In one embodiment of the present disclosure, the nickel(II) source, the diene-based compound and the reducing agent may be supplied in a composition form comprising the same.

In one embodiment of the present disclosure, the composition may comprise each of the materials and an organic solvent. The concentration of each of the materials is not particularly limited, and may be adjusted to have a

molar ratio to describe later.

In one embodiment of the present disclosure, the solvent may be a hydrocarbon solvent not reacting with an anion, and examples thereof may comprise any one or more selected from among linear hydrocarbon compounds such as pentane, hexane and octane; derivatives thereof having a double branch; cyclic hydrocarbon compounds such as cyclohexane and cycloheptane; aromatic hydrocarbon compounds such as benzene, toluene and xylene; linear and cyclic ethers such as dimethyl ether, diethyl ether, anisole and tetrahydrofuran; and amide-based solvents such as dimethylacetamide and dimethylformamide (hereinafter, DMF). Specifically, the organic solvent may be toluene, cyclohexane, hexane, tetrahydrofuran, diethyl ether or dimethylformamide. More specifically, toluene may be most preferred.

In one embodiment of the present disclosure, supply rates of the nickel(II) source, the diene-based compound and the reducing agent are the same as or different from each other, and may each be from 0.5 g/min to 500 g/min, and preferably from 0.5 g/min to 150 g/min, 0.5 g/min to 50 g/min, 0.5 g/min to 20 g/min 0.5 g/min to 15 g/min or 0.5 g/min to 1.5 g/min. In the above-mentioned numerical range, side reaction may be prevented from occurring by smoothly supplying each raw material, and the operation time may be reduced.

In one embodiment of the present disclosure, the nickel(II) source, the diene-based compound and the reducing agent may be supplied from a pressure vessel comprising each of the materials. Flow rates and supply rates thereof may be controlled through a separately connected supply device or pump. Through the device, the raw materials may be introduced to the reactor at a constant rate, and the input amounts may also be measured. The supply device may be used without limit as long as it is capable of preventing a contact with air and controlling the flow rate to be uniform such as a mass flow controller (MFC), a syringe pump or a peristaltic pump.

In one embodiment of the present disclosure, the manufacturing of a zero-valent nickel compound in the first continuous reactor comprises reacting the nickel(II) source, the diene-based compound and the reducing agent in the first continuous reactor. The zero-valent nickel compound may be manufactured through the reaction, and the manufactured zero-valent nickel compound is released from the first continuous reactor.

In one embodiment of the present disclosure, the reaction may be conducted under a condition of a temperature of -78°C to 10°C and a pressure of 1 bar to 10 bar. When the condition is adjusted to the above-mentioned ranges, an exothermic reaction may be controlled during the manufacturing and the reaction rate may be readily controlled. The temperature may be achieved through a pre-temperature maintaining device (pre-temperature coil) and a constant temperature maintaining device (constant-T bath) provided in the first continuous reactor. The pressure may be achieved by adjusting flow rates and supply rates of the reaction materials introduced to the reactor.

In one embodiment of the present disclosure, a pre-temperature maintaining device (pre-temperature coil) may be further comprised at the front end of the first continuous reactor. Through this, temperatures of the reactants may be preliminarily adjusted before introducing to the first continuous reactor.

As illustrated in FIG. 1, the pre-temperature maintaining device (pre-temperature coil) may preliminarily adjust the temperature by a heat exchange coil, and more specifically, may also preliminarily adjust a temperature of the mixer for mixing the nickel(II) source, the diene-based compound and the reducing agent before supplying, however, the role is not limited thereto.

In one embodiment of the present disclosure, the first continuous reactor may comprise a constant temperature maintaining device (Constant-T bath). Through this, the temperature may be adjusted to a target temperature range during the reaction in the first continuous reactor.

In one embodiment of the present disclosure, a molar ratio of the nickel (II) source to the diene-based compound may be from 1:2 to 1:10, or 1:4 to 1:6. In the above-mentioned range, the reaction between the nickel source and the diene-based compound may smoothly occur.

In one embodiment of the present disclosure, a molar ratio of the the nickel(II) source to the reducing agent may be from 1:2 to 1:5, 1:2.3 to 1:2.5, or 1:2.3 to 1:3. In the above-mentioned range, a phenomenon of color worsening caused by the reducing agent may be prevented, and a yield of certain level or higher may be secured.

In one embodiment of the present disclosure, the method for manufacturing a zero-valent nickel compound may have a total process time of 0.01 seconds to 20 minutes, or 1 second to 10 minutes. The total process time is a sum of total times during which the materials stay in the reactor from the time of introducing the reactants to the input unit of the reactor to the time of deriving outputs that are a result reacting the reactants from the reactor.

In one embodiment of the present disclosure, the reaction in the manufacturing of a zero-valent nickel compound may be conducted under an inert gas. A method of creating an inert environment comprises a method of removing moisture and oxygen inside the reactor before supplying the reactants to the reactor, a method of supplying an inert gas into the reactor before supplying the reactants, and the like. Examples of the inert gas may comprise argon (Ar) or nitrogen ($N_2$).

In one embodiment of the present disclosure, as the method of supplying an inert gas into the first continuous reactor, a method of supplying a gas having an inert gas concentration of 99% or greater and preferably 99.9% or greater may be used. The gas comprises an extremely small amount of air and moisture other than an inert gas, and by an inert

gas concentration in the gas satisfying 99% or greater and preferably 99.9% or greater as described above, high yield and reproducibility may be secured by minimizing the zero-valent nickel compound sensitive to oxygen and moisture from being inactivated.

In one embodiment of the present disclosure, a step of continuously supplying the zero-valent nickel compound to a second continuous reactor continuously connected to the first continuous reactor may be further comprised. Types of the second continuous reactor are not particularly limited, and examples thereof may comprise a semi-batch a reactor, PFR or CSTR in this case as well.

As described above, the method for manufacturing a zero-valent nickel compound of the present disclosure is effective in enhancing a yield when manufacturing a zero-valent nickel compound from a nickel(II) source.

In addition, one embodiment of the present disclosure provides a method for manufacturing a polymer.

FIG. 2 is a process diagram illustrating a method for manufacturing a polymer according to one embodiment of the present disclosure, and is a diagram schematically illustrating a second continuous reactor to which a zero-valent nickel compound and a ligand are supplied and a third continuous reactor to which a nickel complex manufactured in the second continuous reactor and a monomer are supplied.

In the method for manufacturing a polymer of the present disclosure, supply of raw materials and release of products may be conducted at the same time in each reactor. Specifically, continuously supplying a zero-valent nickel compound to a second continuous reactor; supplying a ligand to the second continuous reactor; and preparing a nickel complex by reacting the zero-valent nickel compound and the ligand may be conducted at the same time. In addition, continuously supplying the nickel complex to a third continuous reactor; continuously supplying a monomer to the third continuous reactor; and conducting a polymerization reaction may be conducted at the same time. The meaning of being conducted at the same time is the supply of raw materials and the release of products being conducted at the same time without a separate storage time.

In one embodiment of the present application, the third continuous reactor may be kept under a condition of a temperature of 25°C to 200°C and a pressure of 1 bar to 20 bar.

In this case, the products may be released at the same time as the products are produced in the continuous reactors, and introduction and reaction of the raw materials and release of the products may be continuously conducted as a series of processes. Using such a continuous process may significantly reduce a reactor capacity compared to an existing batch-type reaction, and the reaction condition is readily controlled and a constant reaction environment may be maintained. In addition, by introducing the reaction raw materials at a constant rate or ratio, a nickel complex having constant composition and performance may be prepared, and a deviation in the product may be minimized even when manufacturing a large amount.

In one embodiment of the present disclosure, as the zero-valent nickel compound, the zero-valent nickel compound manufactured using the method for manufacturing a zero-valent nickel compound described above may be used. In other words, the zero-valent nickel compound manufactured above in a continuous manner may be used.

In one embodiment of the present disclosure, a step of mixing the zero-valent nickel compound and the ligand may be further comprised. This may reduce generation of unreacted materials by increasing a mixing ratio of the materials, may enhance a heat-controlling effect, and may resultantly enhance a conversion ratio. After mixing the zero-valent nickel compound and the ligand, the result may be supplied to one reactant inlet.

In one embodiment of the present disclosure, the mixing of the zero-valent nickel compound and the ligand may be conducted using a mixer. Descriptions on the mixer used in the mixing of the zero-valent nickel compound and the ligand may be the same as the descriptions on the mixer used in the mixing of the nickel(II) source, the diene-based compound and the reducing agent.

⊗ of FIG. 2 schematically illustrates the mixer.

In one embodiment of the present disclosure, the method of supplying the zero-valent nickel compound and the ligand to the second continuous reactor is not particularly limited, however, for example, the second continuous reactor comprises one or more reactant inlets, and the zero-valent nickel compound and the ligand may each be supplied to the reactant inlet. Herein, supply power may be obtained through a separately connected supply device or pump. Through the device, the raw materials may be introduced to the reactor at a constant rate, and the input amounts may also be measured. The supply device may be used without limit as long as it is capable of preventing a contact with air and controlling the flow rate to be uniform such as a mass flow controller (MFC), a syringe pump or a peristaltic pump.

In one embodiment of the present disclosure, the zero-valent nickel compound and the ligand may be supplied from a storage vessel comprising each of the materials. Flow rate ratios and supply rates thereof may be adjusted through a supply device or a pump connected to the rear end of the storage vessel.

In one embodiment of the present disclosure, the reactant inlet is a constitution for introducing the reaction material to the reactor. The reactant inlet may mean an input unit (or injection unit) for adjusting an input amount of each raw material in the continuous reactor. Herein, the input amount of the raw material injected to each reactant inlet may be adjusted, and by adjusting each input amount depending on the reaction environment, side reactions may be minimized.

In one embodiment of the present disclosure, the second continuous reactor may comprise 1 to N (N is a positive integer of 1 to 10) reactant inlets.

In one embodiment of the present disclosure, the second continuous reactor comprises one or more reactant inlets, and the zero-valent nickel compound and the ligand may be supplied to the same reactant inlet or different reactant inlets.

In one embodiment of the present disclosure, the first continuous reactor comprises one or more reactant inlets, and the zero-valent nickel compound and the ligand may be supplied through the same reactant inlet.

In one embodiment of the present disclosure, the zero-valent nickel compound and the ligand may be each supplied in a solution form comprising the same.

In one embodiment of the present disclosure, the solvent may be a hydrocarbon solvent, and examples thereof may comprise any one or more selected from among linear hydrocarbon compounds such as pentane, hexane and octane; derivatives thereof having a double branch; cyclic hydrocarbon compounds such as cyclohexane and cycloheptane; aromatic hydrocarbon compounds such as benzene, toluene and xylene; linear and cyclic ethers such as dimethyl ether, diethyl ether, anisole and tetrahydrofuran; and amide-based solvents such as dimethylacetamide and dimethylformamide (hereinafter, DMF). Specifically, the organic solvent may be cyclohexane, hexane, tetrahydrofuran, diethyl ether or dimethylformamide.

In one embodiment of the present disclosure, the zero-valent nickel compound and the ligand may be each supplied in a composition form dissolved in the solvent, and the composition may comprise the zero-valent nickel compound and the ligand in 0.1% by weight to 35% by weight each.

In one embodiment of the present disclosure, the supply rates of the zero-valent nickel compound and the ligand are the same as or different from each other, and may each be from 0.1 g/min to 500 g/min, and preferably from 0.2 g/min to 200 g/min, 0.2 g/min to 100 g/min, 0.2 g/min to 50 g/min, 0.2 g/min to 20 g/min or 0.2 g/min to 2 g/min. The supply rate may be adjusted through a mass flow controller (MFC) or a pump. In the above-described range, an effect of minimizing side reactions is obtained without a sudden change the amount of the material injected to each reactant inlet.

In one embodiment of the present disclosure, the zero-valent nickel compound and the ligand may have a molar ratio of 1:2, preferably 1:5 and more preferably 1:10, however, the molar ratio is not limited thereto, and the ligand may be added in excess. However, the zero-valent nickel compound and the ligand may react smoothly in the above-mentioned range, and the zero-valent nickel compound and the ligand may react in the same equivalent. Specifically, when using $Ni(COD)_2$ as the zero-valent nickel compound and BPD as the ligand, a mixture of $Ni\ (COD)_2$, $Ni\ (BPD)_2$, Ni (COD) (BPD) and the like is produced. Among these, Ni (COD) (BPD) has most superior activity, and in order to manufacture the same, adjusting the molar ratio of the zero-valent nickel compound and the ligand to the above-mentioned range is preferred.

In one embodiment of the present disclosure, the second continuous reactor may be kept under a condition of a temperature of -78°C to 70°C and a pressure of 1 bar to 10 bar. When the condition is adjusted to the above-mentioned ranges, an exothermic reaction may be controlled during the nickel complex preparation and the reaction rate may be readily controlled. The temperature may be achieved through a pre-temperature maintaining device (pre-temperature coil) and a constant temperature maintaining device (constant-T bath) provided in the continuous reactor. The pressure may be achieved by adjusting flow rates and supply rates of the reaction materials introduced to the reactor. Specifically, a BPR (back pressure regulator) may be used in the adjustment.

In one embodiment of the present disclosure, the second continuous reactor may comprise a pre-temperature maintaining device (pre-temperature coil). Through this, temperatures of the reactants may be preliminarily adjusted before introducing to the continuous reactor.

In one embodiment of the present disclosure, the continuous reactor may comprise a constant temperature maintaining device (constant-T bath). Through this, the temperature may be adjusted to a target temperature range during the reaction in the continuous reactor.

In one embodiment of the present disclosure, the total process time may be from 0.01 seconds to 20 minutes or 1 second to 10 minutes. The total process time is a sum of total times during which the materials stay in the reactor from the time of introducing the reactants to the input unit of the reactor to the time of deriving outputs that are a result reacting the reactants from the reactor.

In one embodiment of the present disclosure, the preparing of a nickel complex by reacting the zero-valent nickel compound and the ligand may be conducted under an inert environment. In other words, inside the second continuous reactor may be under an inert environment. Herein, a method of creating an inert environment is the same as the method used to conduct the reaction in the manufacturing of a zero-valent nickel compound under an inert gas described above, and comprises a method of removing moisture and oxygen inside the reactor before supplying the reactants to the reactor, a method of supplying an inert gas into the reactor before supplying the reactants, and the like. Examples of the inert gas may comprise argon (Ar) or nitrogen ($N_2$).

In one embodiment of the present disclosure, as the method of supplying an inert gas into the second continuous reactor, a gas having an inert gas concentration of 99% or greater and preferably 99.9% or greater may be used. The

gas comprises an extremely small amount of air and moisture other than an inert gas, and by an inert gas concentration in the gas satisfying 99% or greater and preferably 99.9% or greater as described above, high yield and reproducibility may be secured by minimizing the zero-valent nickel compound sensitive to oxygen and moisture from being inactivated.

In one embodiment of the present disclosure, a step of mixing the nickel complex and the monomer may be further comprised. This may reduce generation of unreacted materials by increasing a mixing ratio of the materials, may enhance a heat-controlling effect, and may resultantly enhance a conversion ratio. In addition, after mixing the nickel complex and the monomer, the result may be supplied to one reactant inlet.

In one embodiment of the present disclosure, the mixing of the nickel complex and the monomer may be conducted for 1 minute to 300 minutes. Herein, the polymerization reaction is sometimes started at the same time as the nickel complex and the monomer are mixed, and therefore, the time of 1 minute to 300 minutes may mean a time summing the time of mixing and the time of conducting the polymerization reaction. In order to adjust the time, a retaining coil (RT coil) may be connected to each reactor.

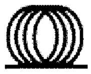 of FIG. 2 schematically illustrates a retaining coil present in the reactor.

In one embodiment of the present disclosure, a supply rate of the nickel complex; and a supply rate of the monomer are the same as or different from each other, and may each be from 0.5 g/min to 500 g/min, and preferably from 0.5 g/min to 150 g/min, 0.5 g/min to 50 g/min, 0.5 g/min to 20 g/min 0.5 g/min to 15 g/min, or 0.5 g/min to 1.5 g/min. The weight (g) of the supply rate may be a weight of the nickel complex or the monomer composition itself; or a total weight of the solution comprising these.

The supply rate may be adjusted through a separately connected mass flow controller (MFC). In the above-described range, an effect of minimizing side reactions is obtained without a sudden change in the amount of the material injected to each reactant inlet.

In one embodiment of the present disclosure, the polymerization reaction may be conducted under an inert environment. Specifically, inside the reactor is readily under an inert environment, and an effect of preventing side reaction or explosions from occurring is obtained. Descriptions on the inert gas are the same as the descriptions provided above.

In one embodiment of the present disclosure, each of the continuous reactors may comprise a heat control device, and the heat control device may be connected to each of the continuous reactors in advance. The reaction occurring in each of the continuous reactors is an exothermic reaction, and in order to quickly control the reaction heat generated herein, the reaction may be conducted in a thermostat. Specifically, a pre-temperature maintaining coil (pre-temperature coil) is installed at the front end of each of the reactors, and the length may be adjusted to achieve thermal equilibrium depending on the flow rate.

In one embodiment of the present disclosure, each of the continuous reactors may further comprise a retaining coil (Rt coil). Through the retaining coil, a residence time during which the reaction is conducted may be adjusted. Specifically, the residence time may be adjusted by adjusting the time during which the material supplied to each of the continuous reactors reacts and stays in the retaining coil. By adjusting the length of the retaining coil and adjusting the supply rates of the supply materials, the residence time may be more finely adjusted.

In one embodiment of the present disclosure, the monomer may comprise a base monomer; and an end-capping monomer (end-capper) .

In one embodiment of the present disclosure, the monomer may be supplied in a solution form comprising the same. The solvent is the same as described above.

In one embodiment of the present disclosure, the composition comprising the monomer may comprise the monomer in 0.1% by weight to 35% by weight.

In one embodiment of the present disclosure, the "polymerization reaction" is a reaction of the monomers polymerizing with each other with the nickel complex functioning as a catalyst. In this case, a reaction of replacing the end group of the monomer with the end-capping monomer may occur.

In one embodiment of the present disclosure, the polymerization reaction may be a Yamamoto polymerization reaction. In the Yamamoto reaction, polymerization is obtained in a manner of inserting a nickel atom of a nickel complex catalyst between monomers, and a specific polymerization method is as described in the literature [T. Yamamoto, "Electrically Conducting and Thermally Stable $\pi$-Conjugated Poly(arylene)s Prepared by Organometallic Processes", Progress in Polymer Science 1993, 17, 1153-1205].

In the present disclosure, the "monomer" is a raw material polymerized to form a polymer. A monomer chemically bonds to another monomer forming a chain. By itself, each of the monomers may be considered to have two or more "functional groups" (in other words, positions where a monomer chemically bonds to another monomer). By chemically bonding each end of a monomer to another monomer, a chain of monomers is formed to produce a polymer. A monomer may have more than two positions as above, and in this case, a polymer having a branch may be formed.

When the monomer is polymerized (regardless of the use of other types of monomers), a polymer comprising

a repeating unit is formed. The polymer preferably comprises, for example, a repeating unit selected from among arylene repeating units as disclosed in the literature [Adv. Mater. 2000 12(23) 1737-1750] and reference documents thereof. An exemplary first repeating unit comprises a 1,4-phenylene repeating unit as disclosed in the literature [J. Appl. Phys. 1996, 79, 934]; a fluorene repeating unit as disclosed in the European Patent No. 0842208; an indenofluorene repeating unit as disclosed in the literature [Macromolecules 2000, 33(6), 2016-2020]; and a spirofluorene repeating unit as disclosed in the European Patent No. 0707020. These repeating units are each optionally substituted. Examples of the substituents may comprise soluble groups such as C1-20 alkyl or alkoxy; electron withdrawing groups such as fluoro, nitro or cyano; and substituents increasing a glass transition temperature of the polymer.

Types of the monomer may comprise a leaving group, and the leaving group may be a halogen group such as F, Cl, Br or I.

The monomer may be a monomer represented by the following Chemical Formula 1.

[Chemical Formula 1]

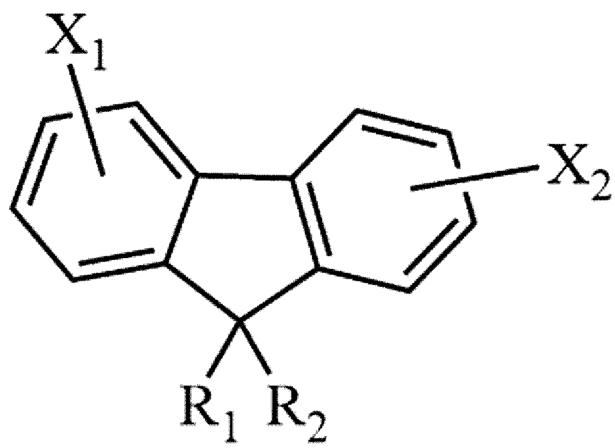

In Chemical Formula 1, R1 and R2 are independently selected from the group consisting of hydrogen; optionally substituted alkyl in which one or more non-neighboring carbon atoms may be replaced by O, S, N, C=O or -COO-; alkoxy, aryl, arylalkyl, heteroaryl and heteroarylalkyl. More preferably, one or more of R1 and R2 are optionally substituted C4-C20 alkyl or an aryl group.

In Chemical Formula 1, X1 and X2 are each independently chlorine, bromine and iodine, and most preferably bromine.

In one embodiment of the present disclosure, the end-capping monomer (end-capper) may be represented by the following structural formulae.

In one embodiment of the present disclosure, the end-capping monomer (end-capper) may be a monofunctional unit having one point of attachment.

In one embodiment of the present disclosure, the end-capping monomer (end-capper) may comprise a crosslinking group or a deuterated crosslinking group.

In one embodiment of the present disclosure, the end-capping monomer (end-capper) may comprise a hydrocarbon aryl group or a deuterated hydrocarbon aryl group.

In one embodiment of the present disclosure, the end-capping monomer (end-capper) is selected from the group consisting of phenyl, biphenyl, diphenylamino, substituted derivatives thereof, and deuterated analogues thereof. In some embodiments, the substituent may be a C1-10 alkyl group, a crosslinking group, or a deuterated derivative thereof.

In one embodiment of the present disclosure, the end-capping monomer (end-capper) may have the following structures.

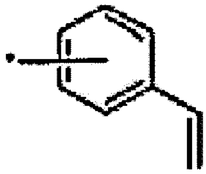
E1

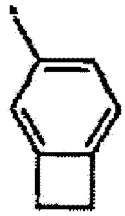
E2

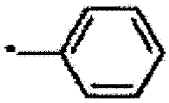
E3

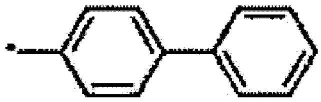
E4

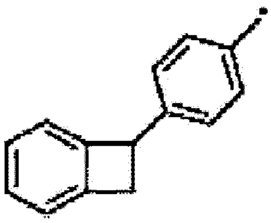
E5

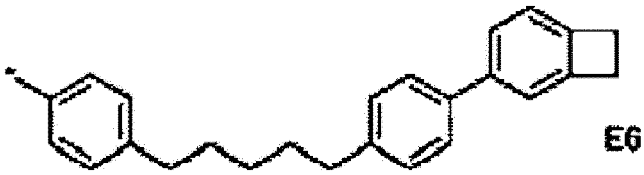
E6

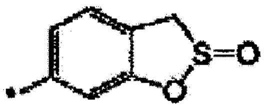
E7

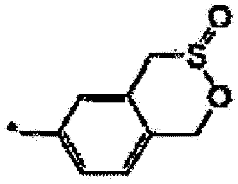
E8

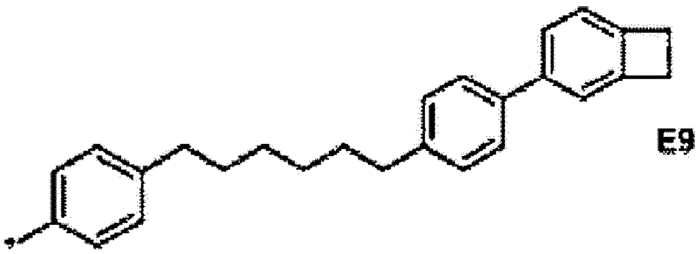
E9

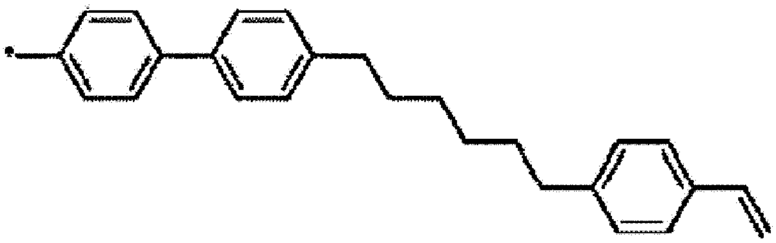
E10

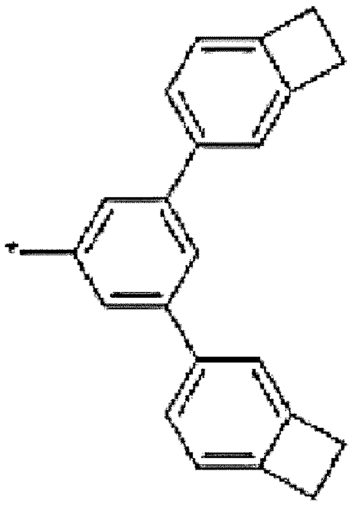
E11

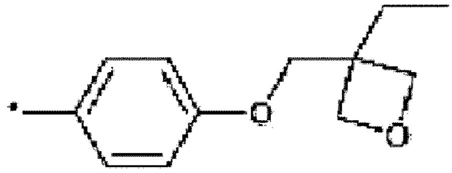
E12

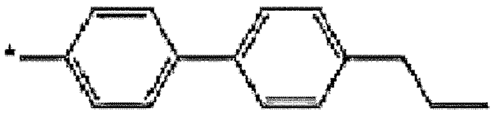
E13

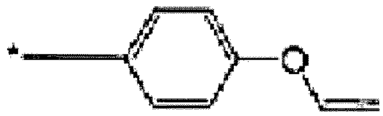
E14

In one embodiment of the present disclosure, a coefficient of variation (CV) of any one or more of a yield, a number average molecular weight (Mn) and a weight average molecular weight (Mw) of the polymer manufactured according to the method for manufacturing a polymer may be 5% or less, 4% or less, or 3% or less. The coefficient of variation (CV) may be calculated by, after calculating a standard deviation value and an average value of each property, dividing the standard deviation value by the average value.

The yield, the number average molecular weight and the weight average molecular weight of the polymer may be calculated by measuring and calculating property values corresponding to the following equations, and the following property values may be calculated using methods generally used in the art. For example, a method of gas chromatography (GC) or gel permeation chromatography (GPC) of the polymer may be used for the calculation.

[Number Average Molecular Weight]

$$M_n = \frac{\sum_i N_i M_i}{\sum_i N_i} = \frac{\sum_i w_i}{\sum_i \frac{w_i}{M_i}}$$

[Weight Average Molecular Weight]

$$\overline{M}_w = \frac{\sum_{i=1}^{N} N_i M_i^2}{\sum_{i=1}^{N} N_i M_i} = \frac{\sum_{i=1}^{N} W_i M_i}{\sum_{i=1}^{N} W_i}$$

($N_i$: number of moles of polymer molecule, $M_i$: molecular weight of polymer, $w_i$: weight of polymer)

Hereinafter, the present disclosure will be described in more detail with reference to examples and comparative examples. However, these are for illuminating the present disclosure, and not for limiting the scope of the present disclosure.

**Preparation Example 1**

A first continuous reactor comprising first and second continuous channels and two vacuum-dried 2 L stainless steel pressure vessels was formed.

To the first pressure vessel of these, a first solution (first reaction solution) obtained by mixing nickel acetylacetonate {$Ni(acac)_2$} (100 g) that is a nickel(II) source, a diene-based compound (1,5-cyclooctadiene) (168 g) and an organic solvent (tetrahydrofuran) (532 g) was prepared and introduced.

To the second pressure vessel, a second solution (second reaction solution) obtained by dissolving a DIBAL reducing agent in toluene at a concentration of 1 M was prepared and introduced.

While maintaining pressures of the first pressure vessel and the second pressure vessel each at 3 bar, the first reaction solution and the second reaction solution were each injected to the continuous reactor by injecting the first reaction solution to the first continuous channel at an injection rate of 1.0 g/min and injecting the second reaction solution to the second continuous channel at an injection rate of 1.0 g/min.

Herein, the nickel acetylacetonate {$Ni(acac)_2$}:1,5-cyclooctadiene:DIBAL had a molar ratio of 1:4:2.05.

Herein, the temperature of the reactor was maintained at -5°C, and the inner pressure was maintained at 2 bar using a backpressure regulator, and the total residence time was adjusted to be 10 minutes.

After the reaction was finished, a zero-valent nickel compound {$Ni(COD)_2$} was obtained in a 75% yield.

**Preparation Example 2**

Preparation was made in the same manner as in Preparation Example 1 except that the first reaction solution and the second reaction solution were each injected to the continuous reactor by injecting the first reaction solution to the first continuous channel at an injection rate of 5.0 g/min and injecting the second reaction solution to the second continuous channel at an injection rate of 5.0 g/min, and after the reaction was finished, a zero-valent nickel compound {$Ni(COD)_2$} was obtained in a 72% yield.

**Preparation Example 3**

Preparation was made in the same manner as in Preparation Example 1 except that the first reaction solution and the second reaction solution were each injected to the continuous reactor by injecting the first reaction solution to the first continuous channel at an injection rate of 10.0 g/min and injecting the second reaction solution to the second continuous channel at an injection rate of 10.0 g/min, and after the reaction was finished, a zero-valent nickel compound {$Ni(COD)_2$} was obtained in a 73% yield.

**Preparation Example 4**

Preparation was made in the same manner as in Preparation Example 1 except that the first reaction solution and the second reaction solution were each injected to the continuous reactor by injecting the first reaction solution to the first continuous channel at an injection rate of 1.0 g/min and injecting the second reaction solution to the second continuous channel at an injection rate of 1.6 g/min, and the molar ratio of the nickel acetylacetonate{$Ni(acac)_2$}:1,5-cyclooctadiene:DIBAL was changed to 1:4:2.6. After the reaction was finished, a zero-valent nickel compound {$Ni(COD)_2$} was obtained in a 68% yield.

**Preparation Example 5**

Preparation was made in the same manner as in Preparation Example 1 except that the first reaction solution and the second reaction solution were each injected to the continuous reactor by injecting the first reaction solution to the first continuous channel at an injection rate of 1.0 g/min and injecting the second reaction solution to the second continuous channel at an injection rate of 2.3 g/min, and the molar ratio of the nickel acetylacetonate {$Ni(acac)_2$}:1,5-cyclooctadiene:DIBAL was changed to 1:4:3. After the reaction was finished, a zero-valent nickel compound{$Ni(COD)_2$} was obtained in a 65% yield.

**Preparation Example 6**

Preparation was made in the same manner as in Preparation Example 1 except that the second solution was changed to a solution obtained by dissolving a DIBAL reducing agent in hexane at a concentration of 1 M, and after the reaction was finished, a zero-valent nickel compound {$Ni(COD)_2$} was obtained in a 70% yield.

**Preparation Example 7**

To a Schlenk flask, nickel acetylacetonate {Ni(acac)$_2$} (4.67 g) that is a nickel (II) source, a diene-based compound (1,5-cyclooctadiene) (7.93 g) and an organic solvent (tetrahydrofuran) (25 mL) were introduced under nitrogen, and cooled to -78°C to control heat.

A solution obtained by dissolving a DIBAH reducing agent (0.0454 mmol) in tetrahydrofuran (THF) at a molar concentration of 1.0 M was introduced thereto, and the result was stirred for 1 hour. After that, the reaction was conducted for 1 hour while raising the temperature to 0°C, and the result was further stirred for 1 hour at 0°C to obtain a final zero-valent nickel compound {Ni(COD)$_2$} in a 72% yield.

**Example 1**

A second continuous reactor continuously connected to the first continuous reactor of Preparation Example 1, and a third continuous reactor continuously connected to the second continuous reactor were prepared. The second continuous reactor was connected to a pressure vessel 1 prepared in advance, and the third continuous reactor was connected to a pressure vessel 2 prepared in advance.

In the pressure vessel 1, a ligand composition was prepared by introducing and dissolving a 2,2'-bipyridyl ligand in a DMF solvent in 5.2 wt%.

In the pressure vessel 2, a monomer composition was prepared by dissolving 2,7-dibromo-9,9-dioctylfluorene (6.93 wt%) and bromobenzene (0.22 wt%) in a toluene solvent.

After that, the zero-valent nickel compound prepared in the first continuous reactor of Preparation Example 1 was supplied to the second continuous reactor, and the ligand composition was supplied to the second continuous reactor (PFR) from the pressure vessel 1 to prepare a nickel complex. The prepared nickel complex was supplied to the third continuous reactor.

Then, after keeping for 1 minute in a first retaining coil (Rt coil), the monomer composition was flowed from the pressure vessel 2 to induce a coupling reaction in the third continuous reactor (PFR).

All the process lines were maintained at 60 degrees Celsius using a thermostat, and after adjusting the pressure to 3 bar by injecting nitrogen to each of the pressure vessels, the flow rates were each adjusted to 1.06 g/min, 0.4 g/min and 0.5 g/min by connecting to a mass flow meter.

After the coupling reaction was completed, the result was aged for 60 minutes in a second retaining coil (Rt coil), and a final product was released out of the reactor.

After that, the solution comprising the final product was cooled to room temperature, and the final product was dropped by stirring in a quenching solution. The obtained polymer sample was stirred for 2 hours for complete quenching and filtered to obtain only the solid component, and the solid component was analyzed by GPC.

In other words, the polymer was prepared according to the following order in Example 1.

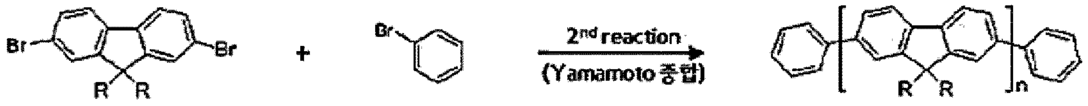


**Example 2**

Preparation was made in the same manner as in Example 1 except that, a monomer composition obtained by dissolving 2,7-dibromo-9,9-dioctylfluorene (6.93 wt%), 1,3,5-tris(4-bromophenyl)benzene (2.56 wt%) and bromobenzene (1.17 wt%) in a toluene solvent was prepared in the pressure vessel 2, the monomer composition was flowed from the pressure vessel 2 to induce a coupling reaction in the third continuous reactor (PFR), all the process lines were maintained at 60 degrees Celsius using a thermostat, and after adjusting the pressure to 3 bar by injecting nitrogen to each of the pressure vessels, the flow rates were each adjusted to 1.86 g/min, 0.71 g/min and 0.5 g/min by connecting to a mass flow meter.

In other words, the polymer was prepared according to the following order in Example 2.

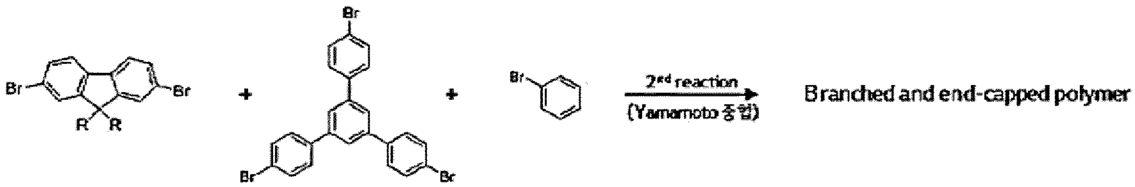


## Comparative Example 1

A polymer was prepared according to the same order as in Example 1, and the polymer was prepared using a batch method instead of a continuous method.

Specifically, a ligand composition was prepared by introducing and dissolving a 2,2'-bipyridyl ligand in a DMF solvent in 5.2 wt% in a first pressure vessel.

A monomer composition obtained by dissolving 2,7-dibromo-9,9-dioctylfluorene (6.93 wt%) and bromobenzene (0.22 wt%) in a toluene solvent was prepared in a second pressure vessel.

In addition, nitrogen and vacuum were alternately injected to a Schlenk flask having a capacity of 100 mL to create an inert atmosphere, and the flask was closed with a rubber septum, taken out, and immersed in a thermostat of 60 degrees Celsius.

After that, the zero-valent nickel compound (21 ml) prepared in the first continuous reactor of Preparation Example 1 was extracted using a gas-tight syringe and injected to the Schlenk flask.

Similarly, the ligand composition (7.4 ml) was extracted using a gas-tight syringe and injected to the flask, and the result was kept for 1 minute.

Lastly, the monomer composition (9.95 ml) was extracted in the same manner and injected to the flask, and the result was reacted for 60 minutes.

After that, the solution comprising a final product was cooled to room temperature, and the final product was dropped by stirring in a quenching solution. The obtained polymer sample was stirred for 2 hours for complete quenching and filtered to obtain only the solid component, and the solid component was analyzed by GPC.

## Comparative Example 2

A polymer was prepared according to the same order as in Example 2, and the polymer was prepared using a batch method instead of a continuous method.

More specifically, preparation was made in the same manner as in Comparative Example 1 except that a monomer composition obtained by dissolving 2,7-dibromo-9,9-dioctylfluorene (6.93 wt%), 1,3,5-tris(4-bromophenyl)benzene (2.56 wt%) and bromobenzene (1.17 wt%) in a toluene solvent was prepared in the second pressure vessel.

FIG. 3 is a process diagram schematically illustrating a process for manufacturing the polymers of Comparative Examples 1 and 2 corresponding to an existing method, and illustrates a process of preparation by sequentially introducing the zero-valent nickel compound, the ligand and the monomer.

## Experimental Example

Yields and Mn/Mw ratios of the polymers prepared in the examples and the comparative examples were measured, and shown in the following Table 1 and Table 2.

[Table 1]

| | Mn (g/mol) | | Mw (g/mol) | | Yield (%) | |
|---|---|---|---|---|---|---|
| Process Time (h) | Example 1 | Comparative Example 1 | Example 1 | Comparative Example 1 | Example 1 | Comparative Example 1 |
| 1.5 to 2 | 10026 | 10379 | 25980 | 25846 | 93.3 | 72 |
| 2 to 2.5 | 10599 | 9934 | 28001 | 23926 | 88.7 | 74.2 |
| 2.5 to 3 | 10990 | 11120 | 26858 | 26014 | 87.5 | 76.5 |
| 3 to 3.5 | 10555 | 10012 | 28933 | 24224 | 90 | 71.1 |
| 3.5 to 4 | 10850 | 9427 | 25331 | 21099 | 90.5 | 73.3 |

(continued)

| | Mn (g/mol) | | Mw (g/mol) | | Yield (%) | |
|---|---|---|---|---|---|---|
| Process Time (h) | Examp le 1 | Comparat ive Example 1 | Example 1 | Comparativ e Example 1 | Exampl e 1 | Comparat ive Example 1 |
| Average | 10604 | 10174 | 27021 | 24222 | 90 | 73.4 |
| CV (%) | 3.48 | 6.18 | 5.42 | 8.18 | 2.43 | 2.85 |

[Table 2]

| | Mn (g/mol) | | Mw (g/mol) | | Yield (%) | |
|---|---|---|---|---|---|---|
| Process Time (h) | Examp le 2 | Comparat ive Example 2 | Example 2 | Comparativ e Example 2 | Exampl e 2 | Comparat ive Example 2 |
| 1.5 to 2 | 4250 | 4552 | 9632 | 10022 | 86.5 | 71.5 |
| 2 to 2.5 | 4033 | 4239 | 8853 | 9254 | 87.9 | 69.5 |
| 2.5 to 3 | 4105 | 4569 | 9530 | 9900 | 88 | 75.5 |
| 3 to 3.5 | 4030 | 4105 | 8777 | 9111 | 89.1 | 75.1 |
| 3.5 to 4 | 3987 | 4200 | 8852 | 9250 | 89.1 | 72 |
| Average | 4081 | 4333 | 9129 | 9507 | 88.1 | 72.7 |
| CV (%) | 2.54 | 4.93 | 4.55 | 4.42 | 1.22 | 3.49 |

The yield means a yield of the polymer obtained after purifying the polymer, Mn and Mw are values obtained through a PS calibration GPC method (equipment used: 1200 series of Agilent) of the obtained polymer, and the CV is a coefficient of variation and means a value obtained by dividing the standard deviation by the average value of the yield, Mn and Mw of the polymer formed for each number of each process.

The yield was superior and the coefficient of variation of each evaluation item was low when preparing the polymer using the continuous process of the examples. Therethrough, it was identified that property reproducibility of the polymer was superior when preparing the polymer using the continuous process of the examples.

On the other hand, the yield was low and the coefficient of variation of each evaluation item was high when preparing the polymer using the batch process of the comparative examples. Therethrough, it was identified that property reproducibility of the polymer was low when preparing the polymer using the batch process of the comparative examples.

Through the results, it was identified that the yield of the polymer increased and property reproducibility was significantly enhanced when using the continuous process of the present disclosure instead of an existing batch method.

In addition, from the fact that property reproducibility of the polymer prepared using the zero-valent nickel compound prepared according to the method for manufacturing a zero-valent nickel compound of the present disclosure was significantly enhanced, it was identified that, when preparing a zero-valent nickel compound according to the method for manufacturing a zero-valent nickel compound of the present disclosure, a zero-valent nickel compound having constant quality while having a high yield was able to be prepared.

In addition, it was identified that the method for manufacturing a zero-valent nickel compound according to one embodiment of the present disclosure had a shorter reaction time and more enhanced stability compared to a batch method.

## Claims

1. A method for manufacturing a zero-valent nickel compound, the method comprising:

    supplying a nickel(II) source to a first continuous reactor;
    supplying a diene-based compound to the first continuous reactor;
    supplying a reducing agent to the first continuous reactor; and
    reacting the nickel(II) source, the diene-based compound and the reducing agent in the first continuous reactor, wherein supply rates of the nickel(II) source, the diene-based compound and the reducing agent are the same

as or different from each other, and are each from 0.5 g/min to 500 g/min.

2. The method for manufacturing a zero-valent nickel compound of Claim 1, wherein the first continuous reactor comprises one or more continuous channels, and the nickel(II) source, the diene-based compound and the reducing agent are each supplied to the continuous channel.

3. The method for manufacturing a zero-valent nickel compound of Claim 1, wherein the reaction is conducted under a condition of a temperature of -78°C to 10°C and a pressure of 1 bar to 10 bar.

4. The method for manufacturing a zero-valent nickel compound of Claim 1, wherein the nickel(II) source comprises nickel acetylacetonate {$Ni(acac)_2$}.

5. The method for manufacturing a zero-valent nickel compound of Claim 1, wherein the diene-based compound is any one or more selected from the group consisting of 1,4-cyclohexadiene, bicyclo[2.2.2]hepta-2,5-diene, 5-ethylidene-2-norbonene, 5-methylene-2-norbonene, 5-vinyl-2-norbonene, bicyclo[2.2.2]octa-2,5-diene, 4-vinylcyclohex-1-ene, bicyclo[2.2.1]hepta-2,5-diene, bicyclopentadiene, methyltetrahydroindene, 5-allyl bicyclo[2.2.1]hept-2-ene and 1,5-cyclooctadiene.

6. The method for manufacturing a zero-valent nickel compound of Claim 1, which has a total process time of 0.01 seconds to 20 minutes.

7. The method for manufacturing a zero-valent nickel compound of Claim 1, wherein the reaction is conducted under an inert gas.

8. The method for manufacturing a zero-valent nickel compound of Claim 1, comprising continuously supplying the zero-valent nickel compound to a second continuous reactor continuously connected to the first continuous reactor.

9. A method for manufacturing a polymer, the method comprising:

continuously supplying a zero-valent nickel compound to a second continuous reactor;
supplying a ligand to the second continuous reactor;
preparing a nickel complex by reacting the zero-valent nickel compound and the ligand;
continuously supplying the nickel complex to a third continuous reactor;
continuously supplying a monomer to the third continuous reactor; and
conducting a polymerization reaction,
wherein a supply rate of the nickel complex; and a supply rate of the monomer are the same as or different from each other, and are each from 0.5 g/min to 500 g/min.

10. The method for manufacturing a polymer of Claim 9, wherein the second continuous reactor and the third continuous reactor are continuously connected to each other.

11. The method for manufacturing a polymer of Claim 9, wherein the second continuous reactor is kept under a condition of a temperature of -78°C to 70°C and a pressure of 1 bar to 10 bar.

12. The method for manufacturing a polymer of Claim 9, wherein the polymerization reaction uses Yamamoto polymerization.

13. The method for manufacturing a polymer of Claim 9, wherein the preparing of a nickel complex by reacting the zero-valent nickel compound and the ligand is conducted under an inert environment.

14. The method for manufacturing a polymer of Claim 9, wherein the third continuous reactor is kept under a condition of a temperature of 25°C to 200°C and a pressure of 1 bar to 20 bar.

15. The method for manufacturing a polymer of Claim 9, wherein the polymerization reaction is conducted under an inert environment.

16. The method for manufacturing a polymer of Claim 9, wherein a coefficient of variation (CV) of any one or more of a yield, a number average molecular weight (Mn) and a weight average molecular weight (Mw) of the manufactured

polymer is 5% or less.

【FIG. 1】

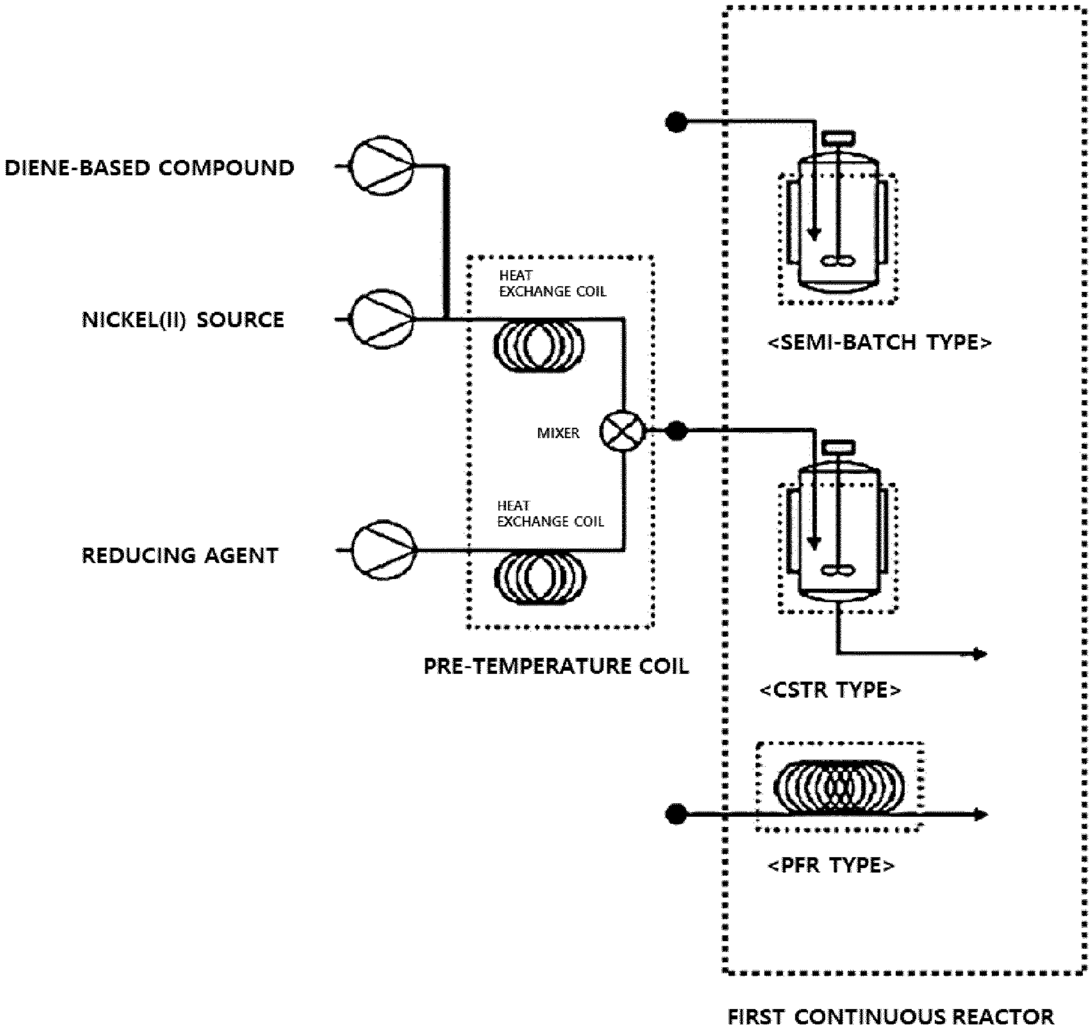
DIENE-BASED COMPOUND
NICKEL(II) SOURCE
REDUCING AGENT
HEAT EXCHANGE COIL
MIXER
HEAT EXCHANGE COIL
PRE-TEMPERATURE COIL
<SEMI-BATCH TYPE>
<CSTR TYPE>
<PFR TYPE>
FIRST CONTINUOUS REACTOR

【FIG. 2】

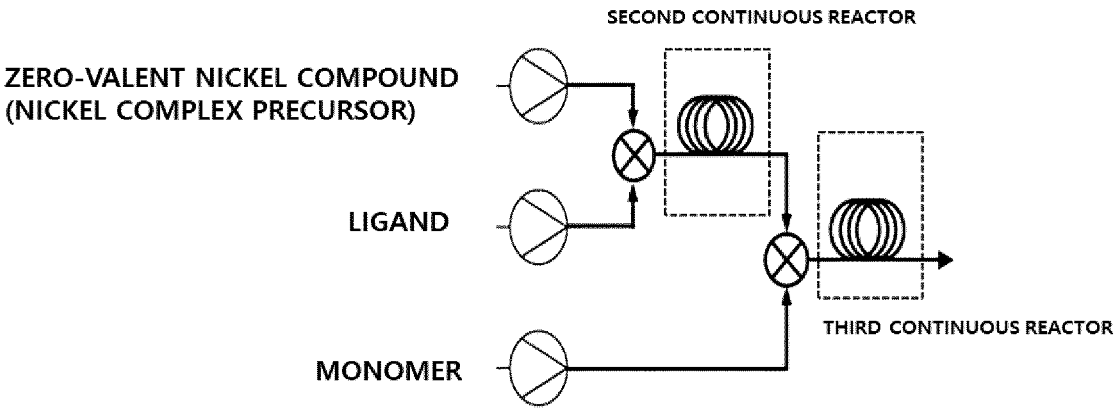
SECOND CONTINUOUS REACTOR
ZERO-VALENT NICKEL COMPOUND
(NICKEL COMPLEX PRECURSOR)
LIGAND
MONOMER
THIRD CONTINUOUS REACTOR

【FIG. 3】

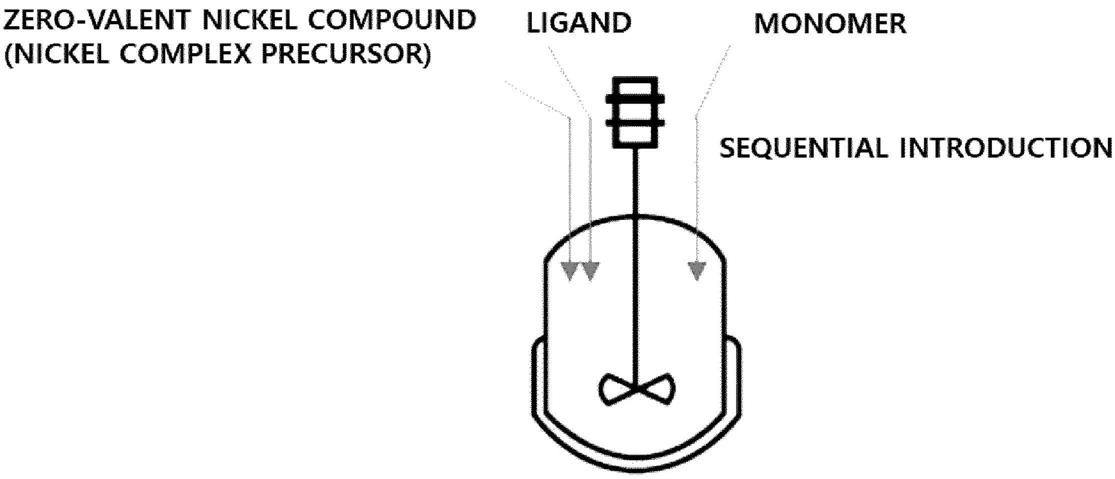
ZERO-VALENT NICKEL COMPOUND
(NICKEL COMPLEX PRECURSOR)
LIGAND
MONOMER
SEQUENTIAL INTRODUCTION

**INTERNATIONAL SEARCH REPORT**

International application No. **PCT/KR2021/010748**

**A. CLASSIFICATION OF SUBJECT MATTER**

**C08G 61/02**(2006.01)i; **C07F 15/04**(2006.01)i

According to International Patent Classification (IPC) or to both national classification and IPC

**B. FIELDS SEARCHED**

Minimum documentation searched (classification system followed by classification symbols)

C08G 61/02(2006.01); B01J 31/14(2006.01); B01J 8/00(2006.01); B01J 8/06(2006.01); C07C 2/36(2006.01); C07F 15/04(2006.01); C08F 10/00(2006.01); C08F 4/80(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 0가 니켈 화합물(zero-valent nickel compound), 중합체(polymer), 연속식 반응기(continuous reactor), 니켈 아세토네이트(nickel acetonate), 디엔계 화합물(diene-based compound), 환원제(reducing agent)

**C. DOCUMENTS CONSIDERED TO BE RELEVANT**

| Category* | Citation of document, with indication, where appropriate, of the relevant passages | Relevant to claim No. |
|---|---|---|
| | US 5130458 A (WU, A.-H.) 14 July 1992 (1992-07-14) | |
| X | See claims 1-10; and column 2, lines 5-51. | 1-7 |
| Y | | 8 |
| A | | 9-16 |
| | JP 2002-540225 A (ATOFINA) 26 November 2002 (2002-11-26) | |
| X | See claims 1-13; and paragraphs [0046]-[0048]. | 9-11,13-16 |
| Y | | 8,12 |
| | KR 10-2007-0101260 A (MERCK PATENT GMBH) 16 October 2007 (2007-10-16) | |
| Y | See claims 1-19; and paragraph [0065]. | 12 |
| | KR 10-2014-0001830 A (INVISTA TECHNOLOGIES S.À R.L.) 07 January 2014 (2014-01-07) | |
| A | See entire document. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 December 2021** | **06 December 2021** |
| Name and mailing address of the ISA/KR<br>**Korean Intellectual Property Office<br>Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**

International application No.
**PCT/KR2021/010748**

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0034420 A (IFP ENERGIES NOUVELLES) 04 April 2018 (2018-04-04)<br>See entire document. | 1-16 |

Form PCT/ISA/210 (second sheet) (July 2019)

**INTERNATIONAL SEARCH REPORT**
**Information on patent family members**

International application No.
**PCT/KR2021/010748**

| Patent document cited in search report | Publication date (day/month/year) | Patent family member(s) | Publication date (day/month/year) |
|---|---|---|---|
| US 5130458 A | 14 July 1992 | None | |
| JP 2002-540225 A | 26 November 2002 | AT 269348 T | 15 July 2004 |
| | | AU 3299100 A | 09 October 2000 |
| | | EP 1165577 A1 | 02 January 2002 |
| | | EP 1165577 B1 | 16 June 2004 |
| | | ES 2223475 T3 | 01 March 2005 |
| | | FR 2790978 A1 | 22 September 2000 |
| | | FR 2790978 B1 | 04 May 2001 |
| | | US 6818714 B1 | 16 November 2004 |
| | | WO 00-56744 A1 | 28 September 2000 |
| KR 10-2007-0101260 A | 16 October 2007 | AT 419916 T | 15 January 2009 |
| | | CN 101094718 A | 26 December 2007 |
| | | CN 101094718 B | 30 July 2014 |
| | | EP 1676632 A1 | 05 July 2006 |
| | | EP 1830951 A1 | 12 September 2007 |
| | | EP 1830951 B1 | 07 January 2009 |
| | | JP 2008-525603 A | 17 July 2008 |
| | | JP 4891260 B2 | 07 March 2012 |
| | | KR 10-1244509 B1 | 18 March 2013 |
| | | TW 200631963 A | 16 September 2006 |
| | | TW I378943 B | 11 December 2012 |
| | | US 2008-0207851 A1 | 28 August 2008 |
| | | US 2016-0264720 A1 | 15 September 2016 |
| | | US 9415370 B2 | 16 August 2016 |
| | | WO 2006-069773 A1 | 06 July 2006 |
| KR 10-2014-0001830 A | 07 January 2014 | CN 102655936 A | 05 September 2012 |
| | | CN 102655936 B | 05 November 2014 |
| | | CN 103080119 A | 01 May 2013 |
| | | CN 103080119 B | 08 April 2015 |
| | | CN 103080120 A | 01 May 2013 |
| | | CN 103080120 B | 01 June 2016 |
| | | DK 2614070 T3 | 16 October 2017 |
| | | DK 2658651 T3 | 14 January 2019 |
| | | EP 2512673 A1 | 24 October 2012 |
| | | EP 2512673 A4 | 20 November 2013 |
| | | EP 2512673 B1 | 28 September 2016 |
| | | EP 2614070 A1 | 17 July 2013 |
| | | EP 2614070 B1 | 26 July 2017 |
| | | EP 2614071 A1 | 17 July 2013 |
| | | EP 2614071 B1 | 02 December 2015 |
| | | EP 2658651 A1 | 06 November 2013 |
| | | EP 2658651 A4 | 11 November 2015 |
| | | EP 2658651 B1 | 17 October 2018 |
| | | HK 1184161 A1 | 17 January 2014 |
| | | JP 2013-514258 A | 25 April 2013 |
| | | JP 2013-536839 A | 26 September 2013 |
| | | JP 2013-536878 A | 26 September 2013 |
| | | JP 5705986 B2 | 22 April 2015 |
| | | KR 10-2012-0104252 A | 20 September 2012 |
| | | KR 10-2013-0099931 A | 06 September 2013 |

Form PCT/ISA/210 (patent family annex) (July 2019)

**INTERNATIONAL SEARCH REPORT**
**Information on patent family members**

International application No.
**PCT/KR2021/010748**

| Patent document cited in search report | Publication date (day/month/year) | Patent family member(s) | Publication date (day/month/year) |
|---|---|---|---|
| | | KR 10-2014-0084339 A | 04 July 2014 |
| | | TW 201210693 A | 16 March 2012 |
| | | TW 201213337 A | 01 April 2012 |
| | | TW I446965 B | 01 August 2014 |
| | | TW I468413 B | 11 January 2015 |
| | | US 2011-0196168 A1 | 11 August 2011 |
| | | US 2011-0311428 A1 | 22 December 2011 |
| | | US 2013-0317242 A1 | 28 November 2013 |
| | | US 2013-0345459 A1 | 26 December 2013 |
| | | US 8815186 B2 | 26 August 2014 |
| | | US 9024049 B2 | 05 May 2015 |
| | | US 9371343 B2 | 21 June 2016 |
| | | US 9371346 B2 | 21 June 2016 |
| | | WO 2011-075494 A1 | 23 June 2011 |
| | | WO 2011-075496 A1 | 23 June 2011 |
| | | WO 2012-033555 A1 | 15 March 2012 |
| | | WO 2012-033556 A1 | 15 March 2012 |
| KR 10-2018-0034420 A | 04 April 2018 | CN 108136383 A | 08 June 2018 |
| | | CN 108136383 B | 09 March 2021 |
| | | EP 3328542 A1 | 06 June 2018 |
| | | EP 3328542 B1 | 08 September 2021 |
| | | FR 3039430 A1 | 03 February 2017 |
| | | FR 3039430 B1 | 05 July 2019 |
| | | JP 2018-522895 A | 16 August 2018 |
| | | JP 6807377 B2 | 06 January 2021 |
| | | TW 201714859 A | 01 May 2017 |
| | | TW I704125 B | 11 September 2020 |
| | | US 10633303 B2 | 28 April 2020 |
| | | US 2018-0215681 A1 | 02 August 2018 |
| | | WO 2017-017087 A1 | 02 February 2017 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200101053
- KR ANDNO1020200101128
- WO 0053656 A
- EP 0842208 A
- EP 0707020 A


### Non-patent literature cited in the description


- **T. YAMAMOTO.** Electrically Conducting And Thermally Stable n-Conjugated Poly(arylene)s Prepared by Organometallic Processes. *Progress in Polymer Science,* 1993, vol. 17, 1153-1205
- *J. Org. Chem.,* 1990, 4229-4230
- *Tetrahedron letters,* 1975, vol. 39, 3375-3378
- *Organometallics,* 2017, vol. 36, 3508-3519
- *Chem. Soc. Rev.,* 1985, vol. 14, 93-120
- **T. YAMAMOTO.** Electrically Conducting and Thermally Stable π-Conjugated Poly(arylene)s Prepared by Organometallic Processes. *Progress in Polymer Science,* 1993, vol. 17, 1153-1205
- *Adv. Mater.,* 2000, vol. 12 (23), 1737-1750
- *J. Appl. Phys.,* 1996, vol. 79, 934
- *Macromolecules,* 2000, vol. 33 (6), 2016-2020